(19)

Europäisches
Patentamt
European
Patent Office
Office européen
des brevets

(11) **EP 3 013 008 B1**

(12) **EUROPEAN PATENT SPECIFICATION**

(45) Date of publication and mention
of the grant of the patent:
**06.02.2019 Bulletin 2019/06**

(51) Int Cl.:
*H04L 12/709* (2013.01)   *H04L 12/891* (2013.01)
*H04L 12/803* (2013.01)

(21) Application number: **14306685.0**

(22) Date of filing: **23.10.2014**

(54) **Transmitting data traffic in a communication network**

Senden von Datenverkehr in einem Kommunikationsnetz

Transmission de trafic de données dans un réseau de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.04.2016 Bulletin 2016/17**

(73) Proprietor: **Alcatel Lucent
91620 Nozay (FR)**

(72) Inventors:
• **Ronchetti, Luigi
20059 Vimercate (IT)**

• **Gemelli, Riccardo
20059 Vimercate (IT)**
• **Costantini, Carlo
20059 Vimercate (IT)**

(74) Representative: **Nokia EPO representatives
Nokia Technologies Oy
Karaportti 3
02610 Espoo (FI)**

(56) References cited:
**US-A1- 2011 110 253    US-A1- 2014 241 369**

EP 3 013 008 B1

## Description

### Technical field

The present invention relates to the field of communication networks. In particular, the present invention relates to a method for transmitting data traffic in a communication network as well as transport devices, a communication network and an access device.

### Background art

The increasing demand for high-speed interconnections for Internet usage and data center operation is pushing the interest of system vendors towards the development of high-speed Ethernet interfaces and links. As known, the IEEE 802.3ba task force has been established with the objective of standardizing 100 Gigabit Ethernet and 40 Gigabit Ethernet (GbE) technologies over the Internet and within data centers.

The IEEE 802.3-2012 Ethernet specification describes a single architecture for accommodating 40 GbE and 100 GbE according to which the MAC layer, which, as known, corresponds to Layer 2 of the ISO-OSI model, is connected to the media (optical fiber or copper) by an Ethernet physical device corresponding to Layer 1 of the ISO-OSI model. The device comprises a physical medium dependent (PMD) sublayer (described in clause 86 of the IEEE 802.3-2012 Ethernet specification), a physical medium attachment (PMA) sublayer (described in clause 83) and a physical coding sublayer (PCS) (described in clause 82). The backplane and copper cabling physical devices also include a forward error correction (FEC) sublayer (described in clause 74) between the PCS sublayer and the PMA sublayer.

In particular, at the transmission side of a 100GbE or 40 GbE Ethernet physical device, the PCS sublayer provides for encoding data bits into code blocks for transmission via the PMA sublayer. The code used is typically the 64B/66B transmission code. Moreover, the PCS sublayer provides for scrambling the encoded data blocks and for distributing them, in a round robin basis, across multiple serial streams when communicating with the PMA. In particular, for example, it uses 4 encoded bit streams for 40GbE or 20 encoded bit streams for 100 GbE. Each serial stream is a virtual lane called a "PCS lane". Moreover, periodically, an alignment block is added to each PCS lane for deskew at the receiving side. Once the PCS lanes are created, they are multiplexed into a number of physical lanes or channels of a multi-lane Ethernet link, the number of physical channels being an integer factor of the number of PCS lanes. Physical channels can be backplanes, copper cables, multi-mode fibers, or WDM (Wavelength Division Multiplexing) channels over single-mode fibers. For instance, in the physical networking devices of a communication network supporting the 100 GbE technology, the 100GBASE-LR4 implementation provides for using 4 wavelengths at 25 Gbps on a single-mode fiber for each direction, while the 100GBASE-SR10 implementation provides for using 10 wavelengths across 10 parallel (multi-mode) optical fibers at 10 Gbps for each direction.

The PMA sublayer is responsible for adapting the number and rate of the PCS lanes to the number and rates of the PMD lanes, while the PMD sublayer is responsible for interfacing to the transmission medium.

As known, if a FEC sublayer is placed between the PCS and PMA sublayers, it is instantiated for each PCS lane. The FEC code is a shortened cyclic code (2112, 2080). For each PCS lane, the code encodes 2080 bits of payload from the PCS sublayer and adds 32 bits of overhead (or parity-check bits).

For transmission in a transport network such as a metropolitan area network (MAN) or a wide area network (WAN), the 40GbE or 100 GbE signal must be integrated into the optical transport network (OTN) architecture. As known, OTN allows different client traffic types - including Ethernet as well as SONET/SDH - to be carried over a single Optical Transport Unit (OTU) frame, either OTU1 at about 2.7 Gbps, OTU2 at about 10.7 Gbps, OTU3 at about 43 Gbps, or OTU4 at about 112 Gbps. In particular, the OTU4 frame is adapted for transporting a 100 GbE client data traffic over an optical transport channel. Correspondingly, the OTN architecture provides for a hierarchy of standard interfaces matching the nominal rates listed above.

US 2011/110253 A1 discloses a plurality of lanes formed between an Ethernet apparatus and a remote Ethernet apparatus. The Ethernet apparatus determines a transmission rate for transmitting a packet and determines the number of lanes to transmit a packet among a plurality of lanes according to the determined transmission rate. The Ethernet apparatus activates the determined number of lanes of a plurality of lanes and transmits the packet to the remote Ethernet apparatus through the activated lanes. Further, the Ethernet apparatus sets the number of lanes for receiving a packet according to a transmission rate, activates the set number of lanes of a plurality of lanes in a state that can receive the packet according to the set number of lanes, and receives packets that are transmitted from the remote Ethernet apparatus through the activated lanes.

### Summary of the invention

Within the transport network, transport switches are being provided with high-speed optical modules equipped with the high-speed optical interfaces (e.g. OTU3, OTU4) adapted for transporting 40GbE or 100 GbE client data traffic.

The inventors noticed that often the actual bandwidth of data traffic transported over the network is below the maximum capacity achievable according to the implemented technology, resulting in an un-optimized usage of network resources, namely an un-optimized usage of the high-speed interfaces and links.

Indeed, if the data traffic which is to be transported in the network between two edge transport switches has a bandwidth lower than 100 Gbps, the capacity of the OTU4 optical interface at each switch is only partly exploited, resulting in a waste of network resources. For instance, in a scenario wherein an edge transport switch is connected to two 100 GbE client routers, the switch is usually equipped with two OTU4 interfaces per direction. If the two client routers collect a total data traffic of less than 100 Gbps, the four OTU4 interfaces of the edge switches are only partly used. Indeed, in this exemplary situation, only one OTU4 interface per direction is actually needed.

In view of the above, the Applicant has faced the problem of providing a method for transmitting data traffic in a communication network that allows optimizing the network resource usage.

In the following description and in the claims, the expression "high-speed interface" will refer to an interface with a data rate (or capacity) equal to 40Gbps or 100 Gbps or higher, such as a 40 GbE or 100 GbE interface. Accordingly the expression "high-speed link" will refer to a link supporting a data rate of 40 Gbps or 100 Gbps or higher, such as a 40 GbE or 100 GbE link.

In the following description and in the claims, the expression "virtual lanes" will indicate a group of parallel data streams into which a data traffic may be split at a network device. An example of a set of virtual lanes within the meaning of the present invention are the PCS lanes mentioned above.

The invention is defined by independent claims 1 and 12-15.

## Brief description of the drawings

The present invention will become clearer by reading the following detailed description, given by way of example and not of limitation, to be read by referring to the accompanying drawings, wherein:

- Figure 1 schematically shows an exemplary communication network;
- Figure 2 is a flow chart describing the method for transmitting data traffic according to a first embodiment of the present invention;
- Figure 3a schematically shows a transmitting portion of a physical device of an egress interface of a source access device and a receiving portion of an edge transport device;
- Figure 3b schematically shows a transmitting portion of the edge transport device and a receiving portion of the physical device of an ingress interface of a destination access device;
- Figure 4 schematically illustrates the information carried over a PCS lane;
- Figure 5 schematically shows the information carried over a PCS lane when a modulation is superimposed over the lane according to the present invention; and
- Figure 6 schematically shows a frame of a multiframe according to the present invention.

## Detailed description of preferred embodiments of the invention

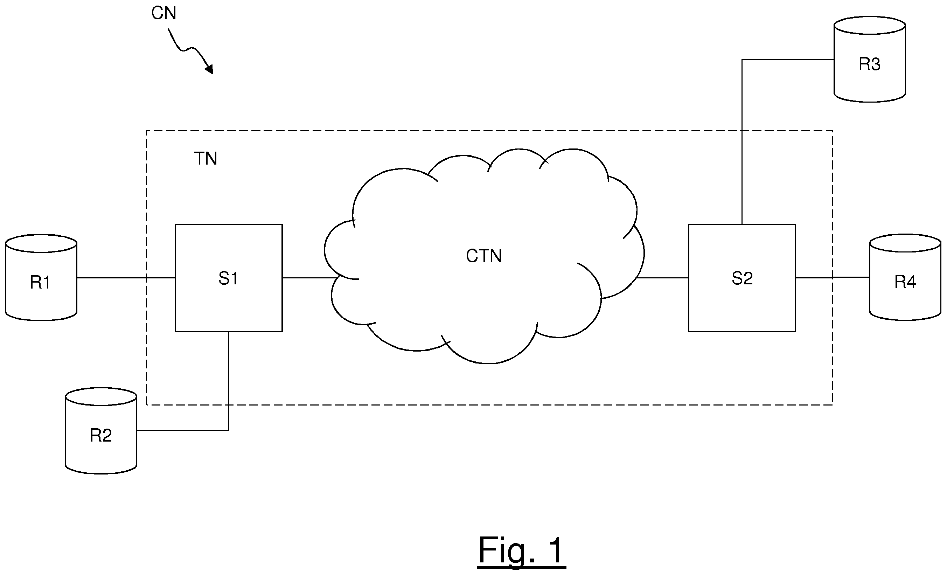

Figure 1 schematically shows a communication network CN according to embodiments of the present invention.

Preferably, the communication network CN comprises one or more access devices and a number of transport devices interconnected to form a transport network TN. In particular, the transport network TN of Figure 1 comprises a first edge transport device S1, a second edge transport device S2 and a core portion CTN comprising a number of core transport devices (not shown).

Each access device is, for instance, a client router, namely a router configured to collect/deliver traffic from/to a number of client devices comprising, for instance, a base transceiver station (BTS) and/or a NodeB and/or an optical network unit (ONU) and/or an Internet service provider server. An access device may also be an edge router of an access network collecting traffic from an access router.

Each transport device is, for instance, a transport switch configured to route traffic within the transport network TN.

Within the exemplary communication network CN of Figure 1, the access device and the edge transport device are independent apparatuses. According to other embodiments, they may be integrated within a same apparatus.

The transport network TN is preferably an optical communication network supporting an optical transport network (OTN) architecture.

The transport network TN could also be a network based on the wavelength division multiplexing (WDM) technique.

The exemplary communication network of Figure 1 comprises four access devices R1, R2, R3, R4. A first access device R1 and a second access device R2 are connected to the first edge transport device S1 which is in turn connected to a core switch (not shown) of the core portion CTN of the transport network TN. Analogously, a third access device R3 and a fourth access device R4 are connected to the second edge transport device S2 which is in turn connected to a further core switch (not shown) of the core portion CTN of the transport network TN.

Assuming, for sake of example, that the data communication takes place from the first and second access devices R1, R2 towards the third and fourth access devices R3, R4, in the following description and in the claims, the first and second access device R1, R2 will be also referred to as first and second source access devices, while the third and fourth access device R3, R4 will be also referred to as first and second destination access devices. The first edge transport device S1 will be referred to also as source edge transport device while the second edge transport device S2 will be also referred to as sink edge transport device.

Preferably, the first source access device R1 and the source edge transport device S1 are connected through a first high-speed link, more preferably a first high-speed Ethernet link such as a 40 GbE or 100 GbE link. Preferably, the second source access device R2 and the source edge transport device S1 are connected through a second high-speed link, more preferably a second high-speed Ethernet link such as a 40 GbE or 100 GbE link.

Similarly, the first destination access device R3 and the sink edge transport device S2 are connected through a third high-speed link, more preferably a third high-speed Ethernet link such as a 40 GbE or 100 GbE link. Preferably, the second destination access device R4 and the sink edge transport device S2 are connected through a fourth high-speed link, more preferably a fourth high-speed Ethernet link such as a 40 GbE or 100 GbE link.

Accordingly, each of the access devices R1, R2, R3, R4 is preferably provided with a respective high-speed interface (for instance, a 40GbE or 100 GbE interface), more preferably an high-speed Ethernet interface, for transmitting/receiving traffic to/from the source or sink edge transport device S1, S2. According to the exemplary situation depicted above, the high-speed interfaces of the first and second source access devices R1, R2 are egress interfaces, while the high-speed interfaces of the first and second destination access devices R3, R4 are ingress interfaces.

Correspondingly, the source edge transport device S1 is preferably provided with a first high-speed access interface (for instance, a 40GbE or 100 GbE interface) for transmitting/receiving traffic to/from the first source access device R1, and with a second high-speed access interface (for instance, a 40GbE or 100 GbE interface) for transmitting/receiving traffic to/from the second source access device R2. Similarly, the sink edge transport device S2 is preferably provided with a first high-speed access interface (for instance, a 40GbE or 100 GbE interface) for transmitting/receiving traffic to/from the third access device R3, and with a second high-speed access interface (namely, a 40GbE or 100 GbE interface) for transmitting/receiving traffic to/from the fourth access device R4. The high-speed access interfaces of the edge transport devices are preferably user-network interfaces (UNIs) of the optical transport network.

Further, the source edge transport device S1 is preferably provided with at least one high-speed transport interface (for instance, an OTU3 or OTU4 interface) for transmitting/receiving traffic from the core portion CTN of the transport network TN. Similarly, the sink edge transport device S2 is preferably provided with at least one high-speed transport interface (namely, an OTU3 or OTU4 interface) for transmitting/receiving traffic from the core portion CTN of the transport network TN. The high-speed transport interfaces of the edge transport devices are preferably network-network interfaces (NNIs) of the optical transport network.

According to the direction of data communication considered above by way of example, the first and second high-speed access interfaces of the source edge transport device S1 are ingress interfaces, its at least one high-speed transport interface is an egress interface, while the first and second high-speed access interfaces of the sink edge transport device S2 are egress interfaces, and its at least one high-speed transport interface is an ingress interface.

The high-speed interfaces of the access devices, as well as the high-speed access interfaces of the edge transport devices of Figure 1 comprise Ethernet physical devices corresponding to Layer 1 of the ISO-OSI model. As already described above, each of these devices comprises a PMD sublayer, a PMA sublayer and a PCS sublayer.

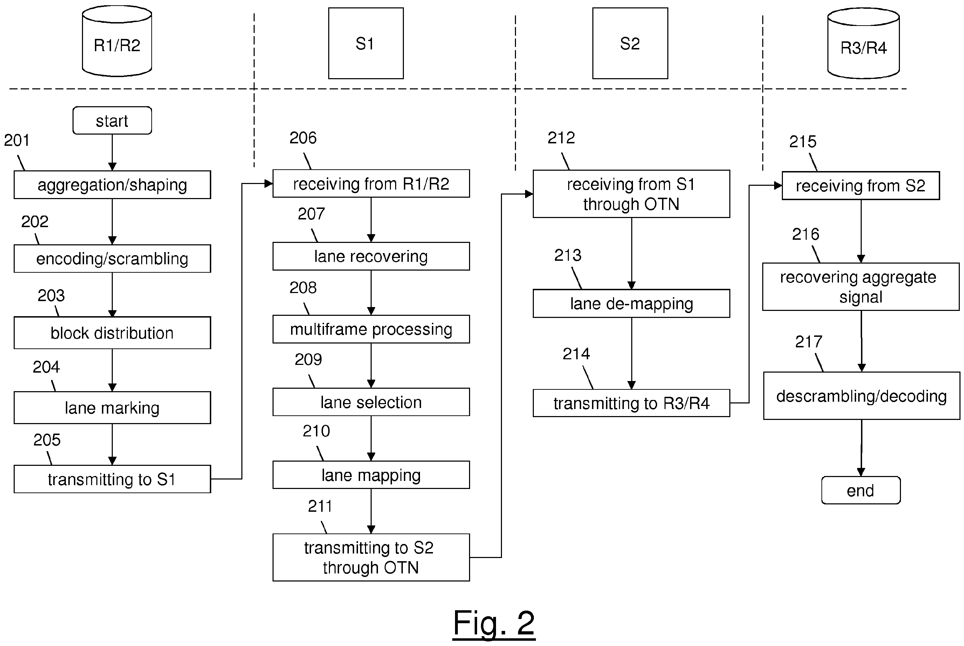

Figure 2 illustrates the method for transmitting data traffic within the communication network CN according to a first embodiment of the present invention. According to this first embodiment, each source access device R1, R2 preferably performs an operation of shaping of the client signals into an aggregate signal at a predefined data rate, an operation of identifying a subset of active virtual lanes of the physical device, namely a subset of active PCS lanes, among the available virtual lanes, into which the data of the aggregate signal are transported towards the source edge transport device S1, and an operation of lane marking to distinguish the active virtual lanes from the other available virtual lanes. The source edge transport device S1 preferably aggregates the data for the transport network TN by selecting, on the basis of the marking information, the active virtual lanes from all the source access devices R1, R2 and mapping them onto a minimum number of optical transport units of the optical transport network, i.e. routing them to a minimum number of egress interfaces, depending on the overall amount of capacity required for transporting the data and on the actual capacity of the egress interfaces (i.e. the rate for transport). For instance, if the overall amount of data to be transported from all the source access devices R1, R2 requires a lower capacity than the capacity of a single egress interface of the source edge transport device S1, the data of the active virtual lanes are preferably routed to that single egress interface for transport.

Further implementation details will be given in the following description.

For sake of clarity, reference will be made to an exemplary situation according to which a first aggregate signal is generated at the first source access device R1 from the aggregation of one or more client signals, and a second aggregate signal is generated at the second source access device R2 from the aggregation of one or more further client signals. Client signals are in the form of packet data flows. It is assumed for sake of example that each aggregate signal has a bandwidth lower than the capacity of the high-speed interfaces of the communication network CN. In particular, it is assumed that the first aggregate signal has an exemplary bandwidth of about 30 Gbps and the second aggregate signal has a bandwidth of about 60 Gbps. It is further assumed for sake of example that the first aggregate signal is addressed to the second destination access device R4 while the second aggregate signal is addressed to the first destination access device R3.

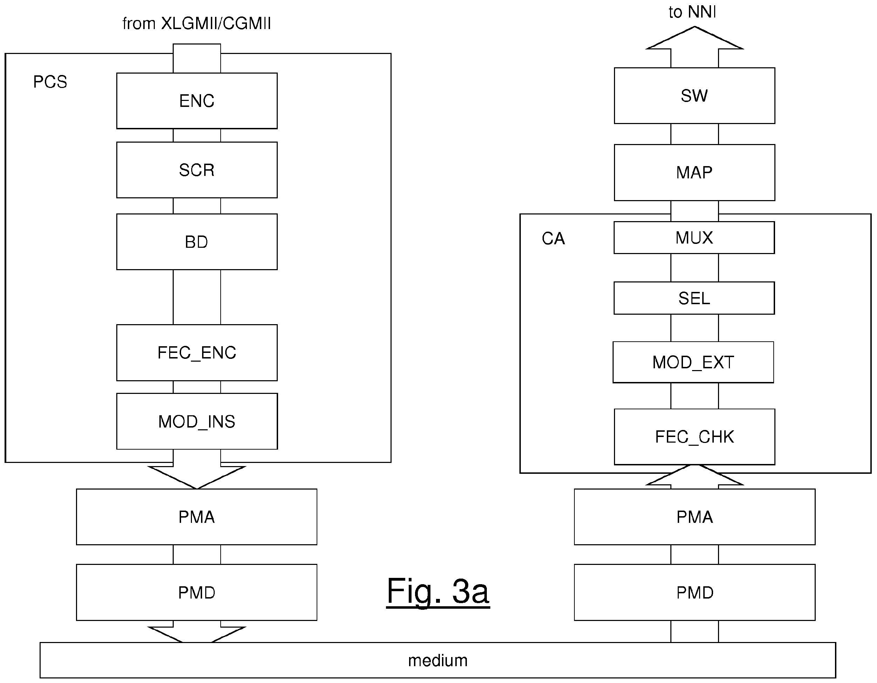

The operations of the first source access device R1 and of the second source access device R2 are the same, and hence, in the following, only the operations of the first source access device R1 will be described in detail. Reference will be made also to Figure 3a which shows a functional block scheme of a transmitting portion of the physical device of the ingress interface of the first source access device R1, on the left, (this scheme is applicable also to the second source access device R2) and of a user-network receiving portion of the source edge transport device S1, on the right. As mentioned above, the first source access device R1 and the source edge transport device S1 are connected by a link comprising physical channels (indicated as "medium" in Figure 3a).

In particular, at step 201, the first source access device R1 preferably shapes the first aggregate signal. In particular, the first source access device R1 preferably buffers the packets of the client signals, which may be received at different data rates, and generates the first aggregate signal as a stream of packets at a predefined data rate. This predefined data rate may be a data rate which has been previously negotiated between the first source access device R1 and the source edge transport device S1, or it may be a data rate which is actually available on the link between the source access device R1 and the source edge transport device S1.

Then, at step 202, the first source access device R1 preferably encodes and scrambles the shaped aggregate signal, while at step 203 it performs a lane marking procedure according to the present invention.

In detail, steps 202 and 203 are preferably performed by the PCS sublayer of the transmitting portion of the physical device of the ingress interface of the first access device R1, which is shown in Figure 3a.

Preferably, the PCS sublayer comprises an encoder ENC, a scrambler SCR and a block distribution module BD. Moreover, the PCS sublayer preferably comprises a FEC encoder FEC_ENC and a modulator MOD_INS. The PCS sublayer may comprise other modules that are not shown in Figure 3a since they are not relevant to the present description.

The PCS sublayer preferably receives the data of the first aggregate signal from the media independent interface of the physical device which in turn receives the data from the higher layers of the ISO-OSI reference model, namely the known the media access control (MAC) layer via the reconciliation sublayer (see Figure 82-1 in clause 82 of IEEE 802.3-2012 Ethernet specification). Data comprise information bytes and control bytes. The media independent interface may be the known CGMII for the 40 GbE implementation or the known XLGMII interface for the 100 GbE implementation, as exemplarily indicated in Figure 3a. Both these known interfaces are described in clause 81 of the IEEE 802.3-2012 Ethernet specification.

The encoder ENC preferably applies a coding scheme to the received data. In particular, preferably, the encoder ENC applies the known 64B/66B coding scheme to the received data. At the output of the encoder ENC, a stream comprising a sequence of data blocks is generated. Each block preferably comprises 66 bit. The first two bits of each block are a synchronization header, which is 01 for blocks comprising only information bytes and 10 for blocks comprising at least one control byte. The remainder of the block contains the payload.

The scrambler SCR preferably scrambles the payload of each block.

Then, at step 203 of the method, the block distribution module BD preferably distributes the data blocks received from the scrambler SCR to a subset of PCS lanes.

As known, the total number N of PCS lanes of the PCS sublayer may be equal to 4 (for 40 GbE implementations) or 20 (for 100 GbE implementations). The capacity C of each PCS lane may accordingly be equal to about 10 Gbps or 5 Gbps. In the following description, reference will be made to a number N of PCS lanes equal to 20. However, this is not limiting as the present invention may apply also when different numbers of virtual lanes are considered.

The number of PCS lanes of the subset to which the 66-bit blocks are distributed is $M \leq N$, wherein M is an integer number equal to or greater than 1. Preferably, the PCS lanes are numbered from 1 to N. The PCS lanes of the subset to which the 66-bit blocks are distributed are, for instance, the PCS lanes that are numbered from 1 to M.

Preferably, the number M of PCS lanes to which the 66-bit block are distributed is statically provisioned to the physical device by a network operator. This number preferably depends on a bandwidth B of the aggregate signal which is to be transmitted by the physical device. In particular, preferably, the number M of PCS lanes to which the 66-bit blocks are distributed is equal to B/C. According to the exemplary situation described above, assuming that the total number N of PCS lanes is 20 at the physical device of each source access device R1, R2, the number M1 of PCS lanes to which the data of the first aggregate signal are distributed is M1=6 and the number M2 of PCS lanes to which the data of the second aggregate signal are distributed is M2=12.

According to an advantageous variant, the number M of PCS lanes to which the 66-bit blocks are distributed is dynamically managed by implementing a method for dynamically increasing or decreasing the bandwidth such as the known Link Capacity Adjustment Scheme (LCAS), or an equivalent technique. The LCAS protocol is currently specified in the ITU-T Recommendation G.7042/Y.1305 (03/2006). The implementation of the dynamic management of the PCS lanes advantageously allows reconfiguring the bandwidth in a hitless manner.

The PCS lanes to which the 66-bit blocks are distributed will be referred to in the following as "active PCS lanes" and the other PCS lanes will be referred to as "inactive PCS lanes".

The block distribution to the active PCS lanes is preferably performed by applying a known round robin scheme on a 66-bit block basis (as described, for instance, in section 82.2.7 of clause 82 of the IEEE 802.3-2012 Ethernet specification). According to this scheme, the first 66-bit block is distributed to the first PCS lane of the PCS sublayer, the second 66-bit-block to the second PCS lane, and so on until the M-th 66-bit block is distributed to the M-th PCS lane. Further, at step 203, the block distribution module BD preferably fills the inactive PCS lanes with idle characters.

The block distribution module BD then preferably sends the N parallel bit streams of the PCS lanes to the FEC encoder, at the nominal rate of C Gbps on each PCS lane.

At step 204, the FEC encoder FEC_ENC preferably performs a FEC coding on each PCS lane, by applying the FEC code described in clause 74 of the IEEE 802.3-2012 Ethernet specification, which, typically, is provided for backplane implementations.

Preferably, the FEC code is a shortened cyclic code (n, k), where n=2112 and k=2080. The FEC block length is n=2112 bits. The code encodes 2080 bits of payload (or information symbols) and adds 32 bits of overhead (or parity symbols). The code is systematic (namely, the parity symbols are added separately to the end of each block).

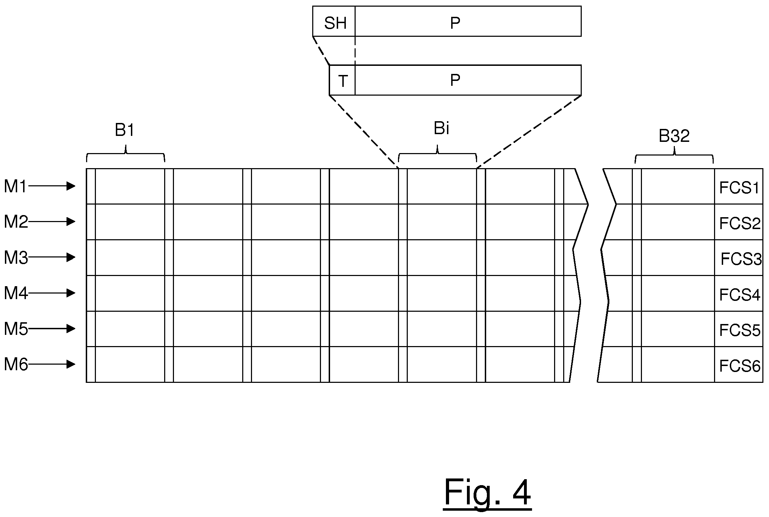

Figure 4 schematically illustrates the operation of the FEC encoder FEC-ENC on a single PCS lane. The FEC encoder FEC_ENC preferably applies the FEC code to FEC blocks comprising 32 sequential 66-bit blocks received from the PCS sublayer. In particular, for each FEC block, the FEC encoder FEC_ENC preferably:

- compresses the two bit of the synchronization header SH of each 66-bit block to 1 transcode bit; and
- computes 32 bit of FEC parity and adds them to the end of the FEC block.

Figure 4 shows six sequential rows of data M1-M6 resulting from the FEC coding, each row comprising 32 65-bit blocks B1, ..., Bi, ..., B32, each 65-bit block comprising one transcode bit T and 64 bit of payload P. Each row also comprises, appended at its end, 32 parity bits FCS1-FCS6. In the following, each row M1-M6 will be referred to as a "message", the 65-bit blocks B1, ..., B32 comprised within a message as the "information part" of the message, and the FEC parity bits of a message as the "frame check sequence" or simply FCS of the message.

Then, at step 204, the modulator MOD_INS preferably adds a modulation on the FEC encoded data, as it will be described in greater detail hereinafter, and then transfers the modulated data to the PMA sublayer.

In detail, the modulator MOD_INS sequentially modulates the messages carried on each PCS lane. In this way, each message may advantageously carry an extra information allowing to mark the PCS lanes and distinguish the active PCS lanes from the inactive PCS lanes, as it will be clearer in the following description.

Preferably, the operation of modulating a message carried on a PCS lane comprises adding a word, i.e. a bit string, to the entire message. Alternatively, the operation of modulating the message may comprise adding a word only to the information part of the message. According to an advantageous variant, the operation of modulating the message comprises adding a word only to the FCS of the message. In this latter case, the implementation is easier since it is not required to generate, or store in the memory of the device, a modulating word as long as the entire message or the information part. Indeed, in this latter case only a modulating word 32 bit long is required. The operation of modulating the message will be described in greater detail hereinafter.

As known, the information part of the message and the FCS may be represented as polynomials. In particular, the FCS is calculated according to a generator polynomial G(x) of degree n-k=32, which is expressed as:

$$G(x)=x^{32}+x^{23}+x^{21}+x^{11}+x^{2}+1.$$

The information part of the message may be represented by polynomial I(x) whose degree is at most k-1. The FEC encoding operation described above produces, as known, the message $M(x)=I(x)*x^{n-k}+R_{G(x)}$, where $R_{G(x)}$ is the remainder module G(x) of the polynomial division of $I(x)*x^{n-k}$ by G(x).

The modulator MOD_INS preferably generates a modulated message $M_m(x)$ by performing the following operation:

$$M_m(x) = M(x) + Wj(x), j=1, 2$$

where Wj(x), j=1, 2 is the polynomial of degree at most equal to n-1 representing the word which is added to the message M(x). If the entire message is modulated, the word has degree n-1, if only the information part is modulated the word has degree k-1, if only the FCS is modulated the word has degree n-k.

Preferably the word Wj(x) is selected among a set of two words comprising a null word W1, i.e. a word represented by a polynomial whose coefficients are all equal to 0, and a modulating word W2 which, for instance, may be represented by a polynomial whose coefficients are all equal to 1. In other words, the null word W1 is a string of at most n-1 bits all equal to 0, while the modulating word W2 may be a string of at most n-1 bits all equal to 1. The choice of a modulating word W2 of 1's is not limiting as other modulating words may be alternatively selected, provided that the modulating word is a constant pattern.

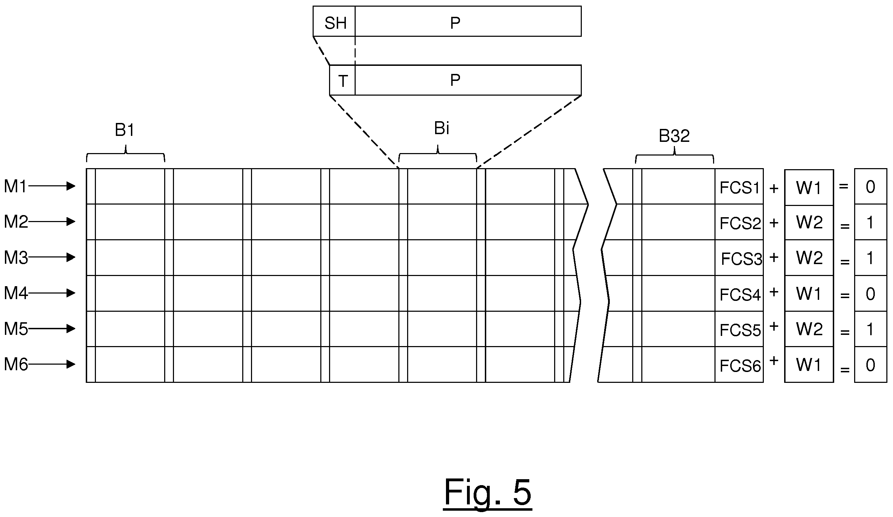

As represented in Figure 5, when the null word W1 is selected for modulating a message of a PCS lane, the corresponding modulated message M1, M4, M6 carries an extra information corresponding to an extra bit equal to 0. When the modulating word W2 is selected for modulating a message of a PCS lane, the corresponding message M2, M3, M5 carries an extra information corresponding to an extra bit equal to 1.

The selection of the word W1, W2 is preferably performed on the basis of the information to be carried, as it will be described in greater detail hereinafter.

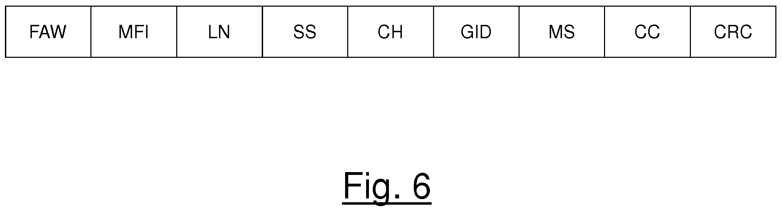

The operation of modulating a number of sequential messages carried on a PCS lane allows associating, with each PCS lane, a multiframe comprising a number of frames of extra bits, which represents the extra information allowing to mark the PCS lanes. An exemplary structure of a single frame of extra bits to be associated with a PCS lane is shown in Figure 6. The frame of extra bits may be 16-bytes long. In this case, the frame of extra bits is built by modulating 16*8=128 sequential messages.

A multiframe may comprise a number of frames equal to 256. The choice of this number is not limiting since other numbers may be selected based on the amount of skew between the PCS lanes which the system is designed to compensate and on the basis of the type of lane management (pure static provisioning or "dynamic" management according to the LCAS protocol or other equivalent protocols capable of handling an hitless reconfiguration of the lanes).

The frame preferably comprises a number of fields. Preferably, the frame of extra bits comprises nine fields as listed hereinafter:

- a frame alignment word field FAW, comprising a frame alignment word in the form of predefined sequence of extra bits that identifies in a unique manner the start of the frame;
- a multiframe indicator field MFI, comprising a multiframe indicator in the form of a sequence of extra bits that indicates a (sequential) number of frame within the multiframe. If the multiframe comprises a number of frames equal to 256, the multiframe indicator increments frame after frame from 0 to 255;
- a lane number field LN, comprising a lane number in the form of a sequence of extra bits that indicates the numbering of the PCS lane with which the multiframe is associated; according to the exemplary situation described above, this number may be an integer number ranging from 0 to M-1;
- a synchronization status field SS, comprising a sequence of extra bits for providing traceability of a synchronization signal; for instance, it may carry a Synchronization Status Message (SSM) as known for the Synchronous Digital Hierarchy (SDH) or a Ethernet Synchronization Messaging Channel (ESMC) as known for Synchronous Ethernet;
- a generic communication channel field CH, comprising a sequence of extra bits for providing a service serial channel;
- a group identity field GID, comprising a group identifier in the form of a sequence of extra bits identifying PCS lanes belonging to a same group. A group may comprise PCS lanes carrying messages of aggregate signals originated by a same source device;
- a member status field MS, comprising a sequence of extra bits that may be used by a destination device to send a feedback information to the source device relating to the status of the PCS lanes: the destination device may for instance send to the source device an information as to whether the PCS lanes are correctly received or not;
- a control field CC comprising a sequence of extra bits preferably comprising a status information indicating a status of the PCS lane with which the multiframe is associated. In particular, the control field CC may comprise a set of extra bits indicating an LCAS-equivalent command. In case of static provisioning, the command may be one of the following: a FIXED command indicating that the PCS lane with which the multiframe is associated is an active lane, and an IDLE command indicating that the lane is inactive. In case of dynamic provisioning, when the LCAS protocol or another equivalent protocol is implemented, the control field CC preferably comprises other LCAS-equivalent commands (according to, for instance, paragraph 6.2 of the ITU-T Recommendation G.7042/Y.1305 mentioned above). Alternatively or in addition, the control field CC may contain a status flag that may be 1 extra bit long and may be set to 1 if the PCS lane is an active PCS lane, 0 if the PCS lane is inactive; and
- a cyclic redundancy check field CRC, comprising a sequence of extra bits comprising a check value for performing a cyclic redundancy check on the frame.

The skilled person will appreciate that the operation of lane marking according to the present invention comprises modulating the messages of each PCS lane and associating a multiframe with each PCS lane, the multiframe carrying the set of information described above. Therefore, in view of the above, the present invention provides for marking the PCS lanes at the multiframe level while the "standard lane marking" operation according to the Ethernet standard implementation, as mentioned above, provides for adding alignment markers directly to the available PCS lanes. However, according to the present invention, at the source access device, also this latter standard lane marking may be performed, even if it is no more necessary at the destination access device for de-skewing and reordering the PCS lanes.

It is to be noticed that advantageously the introduction of the multiframe according to the present invention allows extending the skew compensation between the PCS lanes, at the destination device. Indeed, as known, the maximum skew between lanes which is recoverable for a standard 100 GbE implementation is:

$$(1/2) * (64 \text{ bit} / 5 \text{ Gbps})*16384 = 105 \text{ microseconds}.$$

According to the present invention, one bit of the multiframe occurs every 32 blocks of 64 bits each. Each frame in the multiframe requires transmission of 16 bytes and there are 256 frames of 16 bytes each in a multiframe. Therefore, the maximum skew between lanes is:

$$(\tfrac{1}{2}) * (32 * 64 \text{ bit} / 5 \text{ Gbps}) * (256 * 16 * 8) \approx 6710 \text{ microseconds}$$

which is 64 times higher than the maximum skew for the standard 100 GbE implementation.

Once the modulation is applied, data of the PCS lanes are transferred to the PMA sublayer and the PMD sublayer for transmission over the physical channels of the link between the first source access device R1 and the source edge transport device S1. The operations of the PMA sublayer and the PMD sublayer are known and hence will not be described in greater detail herein after.

At step 205, the resulting signals are transmitted from the first source access device R1 and from the second source access device R2 to the source edge transport device S1 in the form of a first high-speed Ethernet signal and a second high-speed Ethernet signal (for instance, 40GbE or 100 GbE signals).

At step 206, the source edge transport device S1 preferably receives the first Ethernet signal via its first ingress interface and the second high-speed Ethernet signal via its second ingress interface.

As mentioned above, the user-network receiving portion of the first edge transport device S1 according to the present invention is schematically shown in the right part of Figure 3a. This receiving portion preferably comprises the ingress interface (either the first ingress interface or the second ingress interface) in turn comprising a PMD sublayer, a PMA sublayer, and a client adaptation layer CA. The client adaptation layer CA preferably comprises a FEC checking block FEC_CHK, a demodulating block MOD_EXT, a lane selection block SEL and a lane multiplexing block MUX. The receiving portion of Figure 3a further comprises a mapping block MAP ad a switching block SW.

The PMD and PMA sublayers have standard functionalities that will not be described in detail hereinafter.

At step 207 the FEC checking block FEC_CHK preferably processes the received data (for instance, the data carried by the first high-speed Ethernet signal) in order to recover the data carried over the PCS lanes. In particular, the PCS lanes are preferably disinterleaved (in case the number of physical channels is lower than the number of PCS lanes). In this way, for each PCS lane, a received 65-bit block stream (comprising also one received FCS every 32 blocks) is preferably recovered. Then, at step 207, the received FCS, for each PCS lane, is preferably checked for verifying its correctness.

At step 207 the FEC checking block FEC_CHK preferably performs, for each recovered PCS lane, a decoding operation which is preferably applied on each message of the recovered 65-bit block stream. The decoding operation allows recovering the extra bits of the multiframe carried over each PCS lane. This operation will be described hereinafter by means of the mathematical notation already used above for describing the modulation operation.

As described above, M(x) is the polynomial representing the message, with degree at most equal to n-1 and $M_m(x)$ is the polynomial representing the modulated message. In particular, it is assumed M1(x) is the polynomial representing the message modulated with the first word W1(x) (i.e. the null word) while M2(x) is the message modulated with the second word W2(x).

Further, it is assumed that MT(x) is the transmitted message and MR(x) is the received message, i.e. MR(x)=MT(x)+e(x), where e(x) represent an error polynomial whose degree is at most n-1. As known (see section 74.7.1 of clause 74 of the IEEE 802.3-2012 Ethernet specification), errors bursts up to eleven bits may be corrected by the applied shortened cyclic code (2112, 2080).

The decoding operation preferably comprises calculating the remainder modulo G(x) of the polynomial division of the received message MR(x) by G(x), which is the generator polynomial. The remainder modulo G(x) of the polynomial division of the received message MR(x) by G(x) is indicated in the following description as SG(x).

In case of no errors, the following situation may arise:

- SG(x) is equal to zero: in this case the recovered extra bit is equal to 0;
- SG(x) is equal to MG(x), where MG(x) is the remainder modulo G(x) of the polynomial division of W2(x) by G(x): in this case the recovered extra bit is equal to 1

The decoding operation is sequentially repeated for each recovered message of each PCS lane. Recovering the extra bits allows recovering the frames as represented in Figure 6 and the multiframe.

In case of one or more errors, the decoding operation preferably comprises using the received FCS to correct the errors. If the FCS can correct the errors, the recovered extra bit is equal to 0. If otherwise, the FCS can not correct the errors, the decoding operation further comprises adding to the received message MR(x) the second word W2(x) and applying the FCS to correct the errors. If the FCS can correct the errors, the recovered extra bit is equal to 1.

In case the errors cannot be corrected by the FCS, the extra bit can not be reliably recovered. Different situations may arise:

- the unknown extra bit belongs to the frame alignment field FAW of the frame: in this case the decoding operation is not significantly affected by the error(s) since this field is static, namely the value of the frame alignment field FAW is predefined and is periodically repeated across the multiframe;
- if the unknown extra bit belongs to the lane number field LN or the group identity field GID or the member status field MS, it can be recovered by cross checking these fields across multiple frames of the multiframe since the value contained therein is static (lane number, group identity) or predictable (member status); and
- if the error(s) is(are) in the payload of one or more blocks of the recovered message, it(they) is(are) detected by using the FCS.

It is to be noticed that the modulation introduced on the transmitted message according to the present invention advantageously does not significantly affect the correction capabilities of the FCS. Indeed, as known, the FEC coding described above is optional for the physical devices of Ethernet BASE-R standard implementations and has been introduced for backplanes. As mentioned above, the FEC code is capable of correcting an error burst of up to 11 bits per block, which is typical in a backplane channel. However, the inventors noticed that error bursts of this type are quite uncommon over a fiber optic link within a transport network, where errors are more typically occurring in isolated form. Moreover, the distance between the access device and the edge transport device is relatively short and typically it is not affected by significant impairments. Therefore, advantageously, the correction capabilities of the code are not substantially affected by the superimposed modulation.

Once the multiframe is recovered for each PCS lane, its integrity is preferably checked by using the check value comprised within the cyclic redundancy check field CRC of the frame. If a frame of the multiframe contains one or more errors, it is preferably discarded.

At step 208, at the demodulating block MOD_EXT, the multiframe of each PCS lane is preferably processed for recovering, for each PCS lane, the value of the lane number field LN.

Then, at step 209, the selection block SEL preferably selects the active PCS lanes on the basis of the value of the recovered lane number field LN. Indeed, at the first edge transport device S1, the number M of the active PCS lanes may be statically provisioned by a network operator, and hence the active PCS lanes are identified by their numbering (e.g. from 1 to M-1, as already mentioned above).

Further, at step 209, the active PCS lanes are transferred to the multiplexing block MUX. The multiplexing block MUX preferably comprises a number of multiplexers equal to N_mux, which is an integer number equal to or higher than 1. Each multiplexer preferably multiplexes a number of active PCS lanes on a transport data flow at a predefined rate. The number N_mux is preferably selected on the basis of a predefined rate for transport. For instance, if each active PCS lane has a capacity C of 5 Gbps and the transport data flow has a rate of about 10 Gbps, each multiplexer of the multiplexing block MUX multiplexes a pair of active PCS lanes onto a transport data flow.

Then, the multiplexing block MUX preferably transfers N_mux transport data flows to the mapping block MAP. It is to be noticed that at this point the transport data flows comprise data only from the active PCS lanes.

At step 210, the mapping block MAP preferably maps each transport data flow to a corresponding optical payload unit of the optical transport network, in particular, an optical payload unit matching the predefined rate for transport. The mapping is preferably performed according to the known bit synchronous mapping procedure (BMP). In particular, in the exemplary situation described above, with PCS lanes having capacity C equal to about 5 Gbps, a transport data flow (carrying data of a pair of active PCS lanes) at a rate of about 10 Gbps may be transferred to the mapping block MAP via the multiplexing block MUX. In this case the mapping block MAP may map each transport data flow into an OPU2e unit of the optical transport network through BMP.

According to the example above, 6 active PCS lanes are transferred to the source edge transport device S1 from the first source access device R1 through the first ingress interface of the source edge transport device S1, they are multiplexed to 3 transport data flows and mapped onto respective OPUe's, while 12 active PCS lanes are transferred to the source edge transport device S1 from the second source access device R2 through the second ingress interface of the source edge transport device S1, they are multiplexed to 6 transport data flows and mapped onto respective OPUe's.

According to alternative variants, applicable to PCS lanes having capacity C equal to about 5 Gbps, a set of transport data flows at a rate equal to C may be transferred to the mapping block MAP. In this case, each transport data flow carries data of a single active PCS lane and the multiplexing stage is not required. According to this variant, the mapping block MAP may map each transport data flow into an OPUflex unit of the optical transport network This alternative mapping is more efficient, while the former is advantageously compatible with 40 GbE implementations, 100GBASE-SR10 implementations and with legacy WDM transport sections.

At step 210, the optical payload units are mapped into corresponding optical data units for routing purposes at the switching block SW. For instance, an OPUe unit is mapped onto an ODUe unit, and an OPUflex unit is mapped onto an ODUflex unit. The switching block SW preferably comprises a routing table for the core portion CTN of the transport network TN. The routing table preferably comprises information indicating the routing paths of the PCS lanes from each ingress interface of the source edge transport device S1 to the egress interfaces of the sink edge transport device S2. The switching block SW preferably forwards each optical data unit from an ingress interface of the source edge transport device S1 to an egress interface of the source edge transport device S1 on the basis of the PCS lane number and on the basis of a number associated with the ingress interface. In particular, the optical data units carrying the active PCS lanes from the different ingress interfaces of the source edge transport device S1 are forwarded to a mimimum number of egress interfaces, depending on the overall capacity required for transporting the data of the active PCS lanes and the predefined transport rate at the egress interfaces. Then, at each egress interface of the source edge transport device S1 (indicated exemplarily as NNI in Figure 3a), the optical data units into which all the active PCS lanes are mapped are multiplexed into corresponding optical transport units (OTUs) of the optical transport network.

According to the example above, 18 active PCS lanes are mapped onto 9 ODU2e at the source edge transport device S1 and they may be in turn multiplexed onto an OTU4 for transmission via a single egress interface of the first edge transport device S1.

At step 211, the source edge transport device S1 preferably transmits the signal resulting from the multiplexing of the active PCS lanes towards the sink edge transport device S2 via its egress interface(s) and the core portion CTN of the transport network TN.

At step 212, the signal transmitted over the core portion CTN of the transport network TN is preferably received by the sink edge transport device S2 via its ingress interface(s) and, at each ingress interface, it is forwarded to a transmitting portion of the sink edge transport device S2 for transmission towards the destination access devices R3, R4.

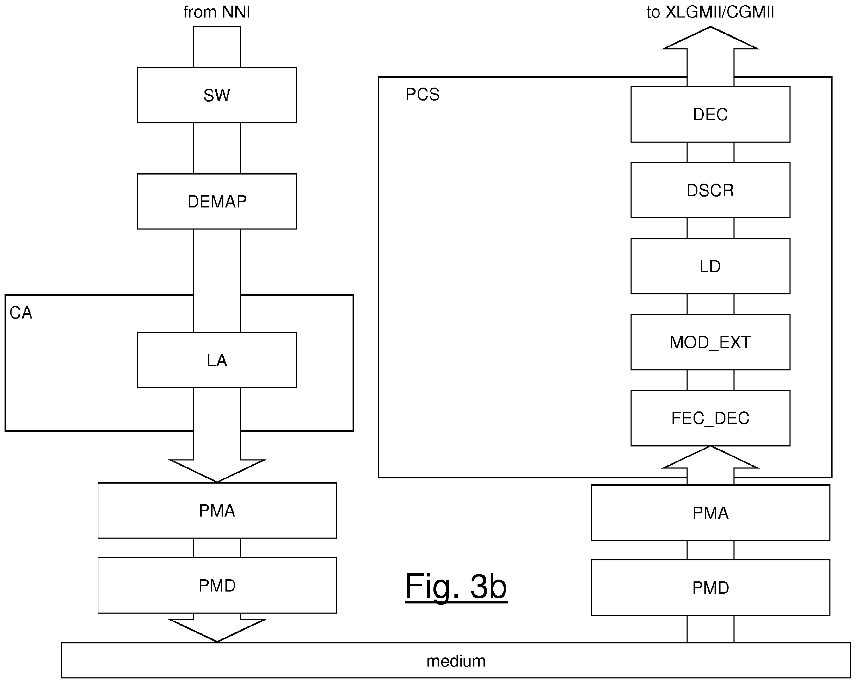

Figure 3b schematically shows, in its left part, a network-user transmitting portion of the sink edge transport device S2 according to the present invention. An ingress interface is exemplarily indicated in Figure 3b as NNI. The network-user transmitting portion preferably comprises a switching block SW and the egress interfaces towards the destination access devices R3, R4. Each egress interface preferably comprises a de-mapping block DEMAP, a client adaptation layer CA, in turn comprising a lane adaptation module LA, a PMA sub-layer and a PMD sub-layer.

The switching block SW preferably routes each optical data unit comprised into the optical transport unit received at the ingress interface(s) towards the respective egress interface.

Then, at each egress interface, the de-mapping block DEMAP preferably recovers the transport data flows comprised within the optical payload units of the received optical data units (step 213).

Further at step 213, at the client adaptation layer CA, the lane adaptation module LA optionally demultiplexes each received transport data flow in order to recover the active PCS lanes (this operation is the inverse operation of the operation performed by the multiplexing block MUX at the client adaptation layer CA of the source edge transport device S1, see Figure 3a). If the number M of active PCS lanes is smaller than the total number N of PCS lanes at the egress interface according to the considered implementation (for instance, as already mentioned above, 20 PCS lanes for 100GBASE-R implementations), a number N-M of PCS lanes is further preferably generated, these PCS lanes comprising idle symbols.

According to the example considered above, the sink edge transport device S2 recovers 18 active PCS lanes, namely it recovers, at its first egress interface, 6 PCS lanes carrying data of the first aggregate signal generated at the first source access device R1 and addressed to the second destination access device R4, and, at its second egress interface, 12 active PCS lanes carrying data of the second aggregate signal generated at the second source access device R2 and addressed to the first destination access device R3.

At step 214, at each egress interface, the data of the PCS lanes are transferred to the PMA sublayer and the PMD sublayer for transmission over the physical channels of the link between the sink edge transport device S2 and the respective destination access devices R3, R4. The operations of the PMA sublayer and the PMD sublayer are known and hence will not be described in greater detail herein after.

At step 215, each destination access device R3, R4 preferably receives the high-speed Ethernet signal transmitted by the sink edge transport device S2 and carrying the data of the respective active PCS lanes. Step 215 is performed by the PMD and PMA sublayers of a receiving portion of the physical device of the ingress interface of the first destination access device R3. A block scheme of this receiving portion is shown in Figure 3b.

At step 216, the first destination access device R3 preferably processes the received signal in order to recover the second aggregate signal while the second destination access device R4 preferably processes the received signal in order to recover the first aggregate signal. These operations will be described in greater detail hereinafter.

In detail, reference will be made only to the operation of the first destination access device R3, the operations performed by the second destination access device R4 being the same. Step 216 is performed by the PCS sublayer of the receiving portion of the physical device of the ingress interface of the first destination access device R3.

The PCS sublayer preferably comprises a FECD decoder FEC_DEC, a demodulating block MOD_EXT, a lane delineation module LD, a descrambler DSCR and a decoder DEC. The PCS sublayer of this receiving portion may comprise other modules that are not shown in Figure 3b since they are not relevant to the present description.

The FEC decoder FEC_DEC preferably receives from the PMA sublayer the PCS lanes and optionally disinterleaves them, in case the number of physical channels is lower than the number of PCS lanes. In this way, for each PCS lane, a received 65-bit block stream (comprising also one received FCS every 32 blocks) is preferably recovered. Then, the FEC decoder FEC_DEC preferably corrects, in case or errors, the received messages of each PCS lane. The FEC decoder FEC_DEC also preferably recovers the extra bit of the multiframe associated to each message, as already described above with reference to step 207 of Figure 2. The recovered extra bits from each PCS lane are used to recover the multiframe. The demodulating block MOD_EXT preferably processes, for each PCS lane, the recovered multiframe and, in particular, extracts the value of the lane number field LN for identifying the PCS lane. Moreover, the frame alignment field FAW and the multiframe indicator field MFI are identified for alignment purposes. On the basis of the extracted information, the relative skew between the PCS lanes is detected. Further, on the basis of the extracted information, the lane delineation module LD preferably reorders and de-skews the PCS lanes and recovers the 66-bit block serialized stream of aggregate data.

At step 217, the descrambler DSCR preferably descrambles the data and transfers the aggregate stream to the decoder DEC which preferably decodes the 66-bit blocks for transmission to the media independent interface, e.g. the XLGMII or CGMII interface as indicated in Figure 3b.

The operations performed at step 217 are known from clause 82 of the IEEE 802.3-2012 Ethernet specification and hence will not be described in greater detail.

According to a second embodiment of the present invention, each source access device preferably performs the operation of shaping the client signals into an aggregate signal at a predefined data rate. Then, it acts as a standard source access device and transfers the virtual lanes to the source edge transport device, which performs the operation of identifying, among the set of available virtual lanes, a subset of active virtual lanes into which data of the aggregate signals are transported towards the sink edge transport device and the operation of lane marking. The source edge transport device preferably also aggregates the data for the transport network by mapping the active virtual lanes onto a minimum number of optical transport units of the optical transport network, i.e. routing them to a minimum number of egress interfaces, depending on the overall amount of capacity required for transporting the data and on the actual capacity of the egress interfaces.

Further implementation details will be given in the following description.

More in detail, the access devices R1, R2, R3, R4 of the communication network CN of Figure 1 according to this second embodiment are standard access devices, i.e. they are configured to transmit/receive to/from the edge transport devices S1, S2 standard high-speed data flows (e.g. standard 100 GbE data flows). The physical devices of the interfaces of the access devices are hence compliant with the provisions of the IEEE 802.3-2012 Ethernet specification. In particular, according to this second embodiment, each source access device R1, R2 performs a standard lane marking at the PCS sub-layer (see paragraph 82.2.7 of clause 82 of the IEEE 802.3-2012 Ethernet specification). Once the PCS lanes from the source access devices R1, R2, are sent to the source edge transport device S1, they are preferably processed as already described above with reference to steps 202, 203 and 204 of Figure 2. In particular, the operations of distributing the 66-bit blocks of the aggregate signal onto the active PCS lanes, the FEC encoding and the modulation of the messages are preferably performed at the source edge transport device S1.

Therefore, each active PCS lane carries a multiframe having the structure described above. Moreover, at the source edge transport device S1, the active PCS lanes are then mapped into the transport entities (i.e. into optical transport units that are matched to the predefined transport rate) and sent towards the sink edge transport device S2 through the core portion CTN of the transport network TN via a minimum number of egress interfaces. These operations are similar to those described above with reference to step 210 of Figure 2.

At each ingress interface of the sink edge transport device S2, step 213 described above is preferably performed to recover the active PCS lanes and then the 66-bit block serialized stream is preferably recovered, as already described above with reference to step 216 according to the first embodiment. The data of the 66-bit block stream are then descrambled and decoded, and then transmitted to the destination access devices R3, R4 as standard high-speed Ethernet signals.

Advantageously, the method of transmitting data traffic according to the present invention allows saving network resources. Indeed, the PCS lanes are multiplexed on a minimum number of high-speed interfaces for transmission over the transport network. The operations of marking the PCS lanes and multiplexing the active ones according to the present invention, as described above, allow consolidating the amount of traffic to be transmitted over the network, thus optimizing the number of high-speed interfaces actually needed.

It is to be noticed that although embodiments of the present invention are described herein primarily with respect to 100 GbE or 40 GbE implementations, a person skilled in the art would appreciate that the embodiments of the present invention are applicable also to different implementations at higher speeds.

Moreover, a person skilled in the art would appreciate that the functions of the various elements shown in the Figures 1, 3a and 3b, including any functional blocks labeled as "device", "unit", "block", "module" or "processing unit", may be provided through the use of dedicated hardware, as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method for transmitting data traffic in a communication network (CN) comprising a transport network (TN), wherein the method is **characterized by**:

    a) identifying a subset of active virtual lanes among a set of available virtual lanes on at least one high speed Ethernet link between at least one access device (R1, R2) and a transport device (S1) of said communication network (CN), wherein said virtual lanes are virtual lanes of the Ethernet physical coding sub-layer;
    b) distributing the data traffic onto said subset of active virtual lanes;
    c) marking each available virtual lane by superimposing a respective multiframe upon the data of the virtual lane for distinguishing the active virtual lanes from the other available virtual lanes; and
    d) on the basis of said marking, mapping the active virtual lanes onto a minimum number of optical transport units of said transport network (TN) for transmitting the data traffic through said transport network (TN).

2. The method according to claim 1, wherein said subset of active virtual lanes among the available virtual lanes is statically provisioned by a network operator.

3. The method according to claim 1, wherein said subset of active virtual lanes among the available virtual lanes is dynamically managed by implementing a link capacity adjustment scheme.

4. The method according to claim 1, wherein each virtual lane comprises a sequence of messages, said message being a group of sequential data blocks of said data traffic, and said marking comprises applying a FEC code to each message of each virtual lane.

5. The method according to claim 4, wherein said FEC code is a cyclic systematic code, and wherein a frame check sequence of said FEC code is appended to each message of each virtual lane.

6. The method according to claim 5, wherein said marking comprises adding a modulation to each FEC encoded virtual lane, wherein said adding a modulation comprises adding a word in the form of a bit string to each message said word being selected between a null word or a further word having a constant pattern.

7. The method according to claim 6, wherein said word is added only to the frame check sequence of each message.

8. The method according to claim 6 or 7, wherein said multiframe comprises one or more frames, each frame in turn comprising a number of extra bits carried by a corresponding number of modulated messages.

9. The method according to claim 8, wherein a frame of said multiframe comprises a frame alignment word identifying the start of the frame within the multiframe, a multiframe indicator indicating a sequential number of the frame within the multiframe, a lane number indicating a number of the virtual lane to which said multiframe is superimposed, and a control field comprising a status information indicating a status of the virtual lane, wherein said status information comprises a command indicating whether said virtual lane belongs to said subset of active virtual lanes or not.

10. The method according to claim 8 or 9, wherein said multiframe comprises 256 frames and each of said frames is 16 bytes long.

11. The method according to any of the preceding claims, wherein said data traffic is a 40 Gigabit Ethernet or a 100 Gigabit Ethernet data flow.

12. A transport device (S1) for a transport network (TN) of a communication network (CN), said transport device (S1) being **characterized in that** it is configured to:

- identify a subset of active virtual lanes among a set of available virtual lanes on at least one high speed Ethernet link between said transport device (S1) and at least one access device (R1; R2) of said communication network (CN), wherein said virtual lanes are virtual lanes of the Ethernet physical coding sub-layer;
- distribute data traffic onto said subset of active virtual lanes;
- mark each available virtual lane by superimposing a respective multiframe upon the data of the virtual lane for distinguishing the active virtual lanes from the other available virtual lanes; and
- on the basis of said marking, map the active virtual lanes onto a minimum number of optical transport units of said transport network (TN) transmitting the data traffic through said transport network (TN).

13. A communication network (CN) comprising an access device (R1) and a transport network (TN) comprising a transport device (S1), wherein said communication network (CN) is **characterized in that** said access device (R1) is configured to identify a subset of active virtual lanes among a set of available virtual lanes on at least one high speed Ethernet link between said access device (R1) and said transport device (S1), wherein said virtual lanes are virtual lanes of the Ethernet physical coding sub-layer, distribute data traffic onto said subset of active virtual lanes and mark each available virtual lane by superimposing a respective multiframe upon the data of the virtual lane for distinguishing the active virtual lanes from the other available virtual lanes, wherein the transport device (S1) is configured to, on the basis of said marking, map the active virtual lanes onto a minimum number of optical transport units of said transport network (TN) for transmitting the data traffic through said transport network (TN).

14. An access device (R1, R2) for a communication network (CN) according to claim 13, said access device (R1, R2) being configured to identify a subset of active virtual lanes among a set of available virtual lanes on at least one high speed Ethernet link between said access device (R1) and the transport device (S1), wherein said virtual lanes are virtual lanes of the Ethernet physical coding sub-layer, distribute data traffic onto said subset of active virtual lanes and mark each available virtual lane by superimposing a respective multiframe upon the data of the virtual lane for distinguishing the active virtual lanes from the other available virtual lanes.

15. A transport device (S1) for a transport network (TN) of a communication network (CN) according to claim 13, wherein said transport device (S1) is configured to receive data traffic on a subset of active virtual lanes among a set of available virtual lanes on at least one high speed Ethernet link between the access device (R1) and said transport device (S1), wherein said virtual lanes are virtual lanes of the Ethernet physical coding sub-layer, wherein each available virtual lane is marked by superimposing a respective multiframe upon the data of the virtual lane for distinguishing the active virtual lanes from the other available virtual lanes, and, on the basis of said marking, to map the active virtual lanes onto a minimum number of optical transport units of said transport network (TN) for transmitting the data traffic through said transport network (TN).

**Patentansprüche**

1. Verfahren zum Senden von Datenverkehr in einem Kommunikationsnetz (CN), umfassend ein Transportnetz (TN), wobei das Verfahren **gekennzeichnet ist durch**:

a) Identifizieren eines Subsatzes aktiver virtueller Spuren unter einem Satz verfügbarer virtueller Spuren auf mindestens einer Hochgeschwindigkeits-Ethernet-Verbindung zwischen mindestens einer Zugriffsvorrichtung (R1, R2) und einer Transportvorrichtung (S1) des Kommunikationsnetzes (CN), wobei die virtuellen Spuren virtuelle Spuren der physikalischen Ethernet-Codiersubschicht sind;

b) Verteilen des Datenverkehrs auf den Subsatz aktiver virtueller Spuren;

c) Markieren jeder verfügbaren virtuellen Spur durch Überlagern der Daten der virtuellen Spur mit einem jeweiligen Mehrfachrahmen zum Differenzieren der aktiven virtuellen Spuren von den anderen verfügbaren virtuellen Spuren; und

d) auf der Basis des Markierens, Mappen der aktiven virtuellen Spuren auf eine minimale Anzahl optischer Transporteinheiten des Transportnetzes (TN) zum Senden des Datenverkehrs **durch** das Transportnetz (TN).

2. Verfahren nach Anspruch 1, wobei der Subsatz aktiver virtueller Spuren unter den verfügbaren virtuellen Spuren statisch von einem Netzbetreiber bereitgestellt wird.

3. Verfahren nach Anspruch 1, wobei der Subsatz aktiver virtueller Spuren unter den verfügbaren virtuellen Spuren dynamisch durch Implementieren eines Verbindungskapazitäts-Einstellschemas verwaltet wird.

4. Verfahren nach Anspruch 1, wobei jede virtuelle Spur eine Sequenz von Nachrichten umfasst, wobei die Nachricht eine Gruppe sequentieller Datenblöcke des Datenverkehrs ist, und das Markieren ein Anwenden eines FEC-Codes auf jede Nachricht jeder virtuellen Spur umfasst.

5. Verfahren nach Anspruch 4, wobei der FEC-Code ein zyklischer systematischer Code ist, und wobei eine Rahmenprüfsequenz des FEC-Codes an jede Nachricht jeder virtuellen Spur angehängt wird.

6. Verfahren nach Anspruch 5, wobei das Markieren ein Hinzufügen einer Modulation zu jeder FEC-codierten virtuellen Spur umfasst, wobei das Hinzufügen einer Modulation ein Hinzufügen eines Worts in der Form einer Bitfolge zu jeder Nachricht umfasst, wobei das Wort zwischen einem Nullwort oder einem weiteren Wort mit einem konstanten Muster ausgewählt wird.

7. Verfahren nach Anspruch 6, wobei das Wort nur zu der Rahmenprüfsequenz jeder Nachricht hinzugefügt wird.

8. Verfahren nach Anspruch 6 oder 7, wobei der Mehrfachrahmen einen oder mehrere Rahmen umfasst, wobei jeder Rahmen seinerseits eine Anzahl von zusätzlichen Bits umfasst, die von einer entsprechenden Anzahl modulierter Nachrichten getragen werden.

9. Verfahren nach Anspruch 8, wobei ein Rahmen des Mehrfachrahmens umfasst: ein Rahmenausrichtungswort, das den Start des Rahmens innerhalb des Mehrfachrahmens identifiziert, einen Mehrfachrahmenindikator, der eine sequentielle Nummer des Rahmens innerhalb des Mehrfachrahmens anzeigt, eine Spurnummer, welche eine Nummer der virtuellen Spur anzeigt, die mit dem Mehrfachrahmen überlagert wird, und ein Steuerfeld, das eine Statusinformation umfasst, die einen Status der virtuellen Spur anzeigt, wobei die Statusinformation einen Befehl umfasst, der anzeigt, ob die virtuelle Spur zu dem Subsatz aktiver virtueller Spuren gehört oder nicht.

10. Verfahren nach Anspruch 8 oder 9, wobei der Mehrfachrahmen 256 Rahmen umfasst, und jeder der Rahmen 16 Bytes lang ist.

11. Verfahren nach einem der vorhergehenden Ansprüche, wobei der Datenverkehr ein 40 Gigabit-Ethernet- oder ein 100 Gigabit-Ethernet-Datenstrom ist.

12. Transportvorrichtung (S1) für ein Transportnetz (TN) eines Kommunikationsnetzes (CN), wobei die Transportvorrichtung (S1) **dadurch gekennzeichnet ist, dass** diese ausgelegt ist:

- einen Subsatz aktiver virtueller Spuren unter einem Satz verfügbarer virtueller Spuren auf mindestens einer Hochgeschwindigkeits-Ethernet-Verbindung zwischen der Transportvorrichtung (S1) und mindestens einer Zugriffsvorrichtung (R1; R2) des Kommunikationsnetzes (CN) zu identifizieren, wobei die virtuellen Spuren virtuelle Spuren der physikalischen Ethernet-Codiersubschicht sind;
- den Datenverkehr auf den Subsatz aktiver virtueller Spuren zu verteilen;
- jede verfügbare virtuelle Spur durch Überlagern der Daten der virtuellen Spur mit einem jeweiligen Mehrfachrahmen zum Differenzieren der aktiven virtuellen Spuren von den anderen verfügbaren virtuellen Spuren zu markieren; und

- auf der Basis des Markierens, die aktiven virtuellen Spuren auf eine minimale Anzahl optischer Transporteinheiten des Transportnetzes (TN) zu mappen, die den Datenverkehr durch das Transportnetz (TN) senden.

**13.** Kommunikationsnetz (CN), umfassend eine Zugriffsvorrichtung (R1) und ein Transportnetz (TN), umfassend eine Transportvorrichtung (S1), wobei das Kommunikationsnetz (CN) **dadurch gekennzeichnet ist, dass** die Zugriffsvorrichtung (R1) ausgelegt ist, einen Subsatz aktiver virtueller Spuren unter einem Satz verfügbarer virtueller Spuren auf mindestens einer Hochgeschwindigkeits-Ethernet-Verbindung zwischen der Zugriffsvorrichtung (R1) und der Transportvorrichtung (S1) zu identifizieren, wobei die virtuellen Spuren virtuelle Spuren der physikalischen Ethernet-Codiersubschicht sind; den Datenverkehr auf den Subsatz aktiver virtueller Spuren zu verteilen; und jede verfügbare virtuelle Spur durch Überlagern der Daten der virtuellen Spur mit einem jeweiligen Mehrfachrahmen zum Differenzieren der aktiven virtuellen Spuren von den anderen verfügbaren virtuellen Spuren zu markieren; wobei die Transportvorrichtung (S1) ausgelegt ist, auf der Basis des Markierens, die aktiven virtuellen Spuren auf eine minimale Anzahl optischer Transporteinheiten des Transportnetzes (TN) zum Senden des Datenverkehrs durch das Transportnetz (TN) zu mappen.

**14.** Zugriffsvorrichtung (R1, R2) für ein Kommunikationsnetz (CN) nach Anspruch 13, wobei die Zugriffsvorrichtung (R1, R2) ausgelegt ist, einen Subsatz aktiver virtueller Spuren unter einem Satz verfügbarer virtueller Spuren auf mindestens einer Hochgeschwindigkeits-Ethernet-Verbindung zwischen der Zugriffsvorrichtung (R1) und der Transportvorrichtung (S1) zu identifizieren, wobei die virtuellen Spuren virtuelle Spuren der physikalischen Ethernet-Codiersubschicht sind; den Datenverkehr auf den Subsatz aktiver virtueller Spuren zu verteilen; und jede verfügbare virtuelle Spur durch Überlagern der Daten der virtuellen Spur mit einem jeweiligen Mehrfachrahmen zum Differenzieren der aktiven virtuellen Spuren von den anderen verfügbaren virtuellen Spuren zu markieren.

**15.** Transportvorrichtung (S1) für ein Transportnetz (TN) eines Kommunikationsnetzes (CN) nach Anspruch 13, wobei die Transportvorrichtung (S1) ausgelegt ist, Datenverkehr auf einem Subsatz aktiver virtueller Spuren unter einem Satz verfügbarer virtueller Spuren auf mindestens einer Hochgeschwindigkeits-Ethernet-Verbindung zwischen der Zugriffsvorrichtung (R1) und der Transportvorrichtung (S1) zu empfangen, wobei die virtuellen Spuren virtuelle Spuren der physikalischen Ethernet-Codiersubschicht sind, wobei jede verfügbare virtuelle Spur durch Überlagern der Daten der virtuellen Spur mit einem jeweiligen Mehrfachrahmen zum Differenzieren der aktiven virtuellen Spuren von den anderen verfügbaren virtuellen Spuren markiert wird; und, auf der Basis des Markierens, die aktiven virtuellen Spuren auf eine minimale Anzahl optischer Transporteinheiten des Transportnetzes (TN) zum Senden des Datenverkehrs durch das Transportnetz (TN) zu mappen.

## Revendications

**1.** Procédé de transmission d'un trafic de données dans un réseau de communication (CN) comprenant un réseau de transport (TN), le procédé étant **caractérisé par** :

a) l'identification d'un sous-ensemble de voies virtuelles actives parmi un ensemble de voies virtuelles disponibles sur au moins une liaison Ethernet à haute vitesse entre au moins un dispositif d'accès (R1, R2) et un dispositif de transport (S1) dudit réseau de communication (CN), lesdites voies virtuelles étant des voies virtuelles de la sous-couche de codage physique Ethernet ;

b) la distribution du trafic de données sur ledit sous-ensemble de voies virtuelles actives ;

c) le marquage de chaque voie virtuelle disponible par superposition d'une multitrame respective sur les données de la voie virtuelle pour faire la distinction entre les voies virtuelles actives et les autres voies virtuelles disponibles ; et

d) en fonction dudit marquage, le mappage des voies virtuelles actives sur un nombre minimal d'unités de transport optiques dudit réseau de transport (TN) pour la transmission du trafic de données sur ledit réseau de transport (TN).

**2.** Procédé selon la revendication 1, dans lequel ledit sous-ensemble de voies virtuelles actives parmi les voies virtuelles disponibles est fourni de manière statique par un opérateur de réseau.

**3.** Procédé selon la revendication 1, dans lequel ledit sous-ensemble de voies virtuelles actives parmi les voies virtuelles disponibles est géré de manière dynamique par la mise en oeuvre d'un schéma d'ajustement de capacité de liaison.

**4.** Procédé selon la revendication 1, dans lequel chaque voie virtuelle comprend une séquence de messages, ledit message étant un groupe de blocs de données séquentiels dudit trafic de données, et ledit marquage comprend l'application d'un code FEC à chaque message de chaque voie virtuelle.

**5.** Procédé selon la revendication 4, dans lequel ledit code FEC est un code systématique cyclique, et dans lequel une séquence de contrôle de trame dudit code FEC est adjointe à chaque message de chaque voie virtuelle.

**6.** Procédé selon la revendication 5, dans lequel ledit marquage comprend l'ajout d'une modulation à chaque voie virtuelle codée FEC, ledit ajout d'une modulation comprenant l'ajout d'un mot sous la forme d'une chaîne de bits à chaque message, ledit mot étant sélectionné entre un mot nul et un autre mot ayant un motif constant.

**7.** Procédé selon la revendication 6, dans lequel ledit mot est ajouté uniquement à la séquence de contrôle de trame de chaque message.

**8.** Procédé selon la revendication 6 ou 7, dans lequel ladite multitrame comprend une ou plusieurs trames, chaque trame comprenant quant à elle un nombre de bits additionnels transportés par un nombre correspondant de messages modulés.

**9.** Procédé selon la revendication 8, dans lequel une trame de ladite multitrame comprend un mot d'alignement de trame identifiant le début de la trame dans la multitrame, un indicateur de multitrame indiquant un numéro séquentiel de la trame dans la multitrame, un numéro de voie indiquant un numéro de la voie virtuelle sur laquelle ladite multitrame est superposée, et un champ de contrôle comprenant des informations de statut indiquant un statut de la voie virtuelle, lesdites informations virtuelles comprenant une commande indiquant si ladite voie virtuelle appartient ou non audit sous-ensemble de voies virtuelles actives.

**10.** Procédé selon la revendication 8 ou 9, dans lequel ladite multitrame comprend 256 trames et chacune desdites trames fait 16 octets de long.

**11.** Procédé selon l'une quelconque des revendications précédentes, dans lequel ledit trafic de données est un flux de données Ethernet de 40 gigabits ou un flux de données Ethernet de 100 gigabits.

**12.** Dispositif de transport (S1) pour un réseau de transport (TN) d'un réseau de communication (CN), ledit dispositif de transport (S1) étant **caractérisé en ce qu'**il est configuré pour :

- identifier un sous-ensemble de voies virtuelles actives parmi un ensemble de voies virtuelles disponibles sur au moins une liaison Ethernet à haute vitesse entre ledit dispositif de transport (S1) et au moins un dispositif d'accès (R1 ; R2) dudit réseau de communication (CN), lesdites voies virtuelles étant des voies virtuelles de la sous-couche de codage physique Ethernet ;
- distribuer du trafic de données sur ledit sous-ensemble de voies virtuelles actives ;
- marquer chaque voie virtuelle disponible par superposition d'une multitrame respective sur les données de la voie virtuelle pour faire la distinction entre les voies virtuelles actives et les autres voies virtuelles disponibles ; et
- en fonction dudit marquage, mapper les voies virtuelles actives sur un nombre minimal d'unités de transport optiques dudit réseau de transport (TN) pour la transmission du trafic de données sur ledit réseau de transport (TN).

**13.** Réseau de communication (CN) comprenant un dispositif d'accès (R1) et un réseau de transport (TN) comprenant un dispositif de transport (S1), ledit réseau de communication (CN) étant **caractérisé en ce que** ledit dispositif d'accès (R1) est configuré pour identifier un sous-ensemble de voies virtuelles actives parmi un ensemble de voies virtuelles disponibles sur au moins une liaison Ethernet à haute vitesse entre ledit dispositif d'accès (R1) et ledit dispositif de transport (S1), lesdites voies virtuelles étant des voies virtuelles de la sous-couche de codage physique Ethernet, distribuer du trafic de données sur ledit sous-ensemble de voies virtuelles actives et marquer chaque voie virtuelle disponible par superposition d'une multitrame respective sur les données de la voie virtuelle pour faire la distinction entre les voies virtuelles actives et les autres voies virtuelles disponibles, le dispositif de transport (S1) étant configuré pour, en fonction dudit marquage, mapper les voies virtuelles actives sur un nombre minimal d'unités de transport optiques dudit réseau de transport (TN) pour la transmission du trafic de données sur ledit réseau de transport (TN).

**14.** Dispositif d'accès (R1, R2) pour un réseau de communication (CN) selon la revendication 13, ledit dispositif d'accès (R1, R2) étant configuré pour identifier un sous-ensemble de voies virtuelles actives parmi un ensemble de voies virtuelles disponibles sur au moins une liaison Ethernet à haute vitesse entre ledit dispositif d'accès (R1) et le dispositif de transport (S1), lesdites voies virtuelles étant des voies virtuelles de la sous-couche de codage physique Ethernet, distribuer du trafic de données sur ledit sous-ensemble de voies virtuelles actives et marquer chaque voie virtuelle disponible par superposition d'une multitrame respective sur les données de la voie virtuelle pour faire la distinction entre les voies virtuelles actives et les autres voies virtuelles disponibles.

15. Dispositif de transport (S1) pour un réseau de transport (TN) d'un réseau de communication (CN) selon la revendication 13, dans lequel ledit dispositif de transport (S1) est configuré pour recevoir du trafic de données sur un sous-ensemble de voies virtuelles actives parmi un ensemble de voies virtuelles disponibles sur au moins une liaison Ethernet à haute vitesse entre le dispositif d'accès (R1) et ledit dispositif de transport (S1), lesdites voies virtuelles étant des voies virtuelles de la sous-couche de codage physique Ethernet, chaque voie virtuelle étant marquée par superposition d'une multitrame respective sur les données de la voie virtuelle pour faire la distinction entre les voies virtuelles actives et les autres voies virtuelles disponibles, et, en fonction dudit marquage, mapper les voies virtuelles actives sur un nombre minimal d'unités de transport optiques dudit réseau de transport (TN) pour la transmission du trafic de données sur ledit réseau de transport (TN).

Fig. 1

R1/R2      S1      S2      R3/R4

start

201   aggregation/shaping

202   encoding/scrambling

203   block distribution

204   lane marking

205   transmitting to S1

206   receiving from R1/R2

207   lane recovering

208   multiframe processing

209   lane selection

210   lane mapping

211   transmitting to S2 through OTN

212   receiving from S1 through OTN

213   lane de-mapping

214   transmitting to R3/R4

215   receiving from S2

216   recovering aggregate signal

217   descrambling/decoding

end

EP 3 013 008 B1

Fig. 2

from XLGMII/CGMII

to NNI

**PCS**

| ENC |
| SCR |
| BD |
| FEC_ENC |
| MOD_INS |

| SW |
| MAP |

**CA**

| MUX |
| SEL |
| MOD_EXT |
| FEC_CHK |

| PMA |

| PMA |

| PMD |

| PMD |

medium

<u>Fig. 3a</u>

EP 3 013 008 B1

20

from NNI

SW

DEMAP

CA

LA

PMA

PMD

## Fig. 3b

medium

to XLGMII/CGMII

PCS

DEC

DSCR

LD

MOD_EXT

FEC_DEC

PMA

PMD

EP 3 013 008 B1

Fig. 4

Fig. 5

| FAW | MFI | LN | SS | CH | GID | MS | CC | CRC |
|-----|-----|-----|-----|-----|-----|-----|-----|-----|

## Fig. 6

**EP 3 013 008 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011110253 A1